# EUROPÄISCHE PATENTSCHRIFT

(11) **EP 3 752 378 B1**
(45) Veröffentlichungstag und Bekanntmachung des Hinweises auf die Patenterteilung: **05.07.2023**
(21) Anmeldenummer: 18796909.2
(22) Anmeldetag: 31.10.2018
(51) Int. Cl.: B60K 1/04

(54) **KRAFTFAHRZEUG MIT MEHREREN BATTERIEMODULEN**
MOTOR VEHICLE HAVING A PLURALITY OF BATTERY MODULES
VÉHICULE À MOTEUR COMPRENANT PLUSIEURS MODULES DE BATTERIES

(30) Priorität: 13.02.2018 DE 102018202191
(43) Veröffentlichungstag der Anmeldung: 23.12.2020
(73) Patentinhaber: Bayerische Motoren Werke Aktiengesellschaft, 80809 München (DE)
(72) Erfinder: AHLERS, Michael, 80995 München (DE); ABDYLI, Fortesa, 73770 Denkendorf (DE); FREIRE, Gabriel Alejandro, 80807 München (DE); ROLLE, Maximilian, 70499 Stuttgart (DE); SCHÖNHOFF, Christopher, 77833 Ottersweier (DE); SELTENREICH, Hermann, 75015 Bretten (DE); STRAUCH, Markus, 76185 Karlsruhe (DE)
(86) Internationale Anmeldenummer: PCT/EP2018/079862
(87) Internationale Veröffentlichungsnummer: WO 2019/158235

(56) Entgegenhaltungen:
- EP-A1- 3 412 486
- WO-A1-2015/124989
- WO-A1-2016/008567
- DE-A1-102009 040 598
- DE-A1-102009 053 138
- DE-A1-102011 051 698
- DE-A1-102011 107 210
- DE-A1-102012 000 622
- DE-A1-102016 203 740
- FR-A1- 2 979 078
- US-A1- 2013 153 317

## Beschreibung

Die Erfindung betrifft ein Kraftfahrzeug mit mehreren Batteriemodulen nach dem Oberbegriff des Patentanspruchs 1 gemäß einer gattungsgemäßen in DE 10 2012 00 622 A1 offenbarten Batterieanordnung für ein Fahrzeug.

Es sind allgemein Batterien mit Batteriemodulen zur Speicherung elektrischer Energie bekannt, die mehrere einzelne Speicherzellen aufweisen, die miteinander kontaktiert sind, sodass die Batterie die gewünschte Spannungshöhe oder Speicherkapazität aufweist. Weiterhin ist bekannt, dass die Speicherzellen Substanzen enthalten, die gesundheitsgefährdend oder brennbar sind, wenn sie bei einer Beschädigung der Speicherzelle austreten. Daher ist es wichtig, dass die Speicherzellen nicht beschädigt werden.

Diese Thematik ist insbesondere bei elektrisch angetriebenen Kraftfahrzeugen von großer Bedeutung, da sichergestellt werden muss, dass auch bei einem Crash die Speicherzellen möglichst nicht beschädigt werden, oder zumindest keine gefährlichen Substanzen austreten können.

Aus der DE 10 2009 053 138 A1 ist bereits ein Kraftfahrzeug mit einer Batterie zur Speicherung elektrischer Energie bekannt, die über mindestens eine Haltevorrichtung mit einer Tragstruktur des Kraftfahrzeugs verbunden ist. In dem die Batterie unmittelbar umgebenden Bereich ist mindestens ein Energieabsorptionselement vorgesehen, das zur Vernichtung der kinetischen Energie der Batterie und/oder des Kraftfahrzeugs im Crashfall dient. Die Haltevorrichtung kann eine Sollbruchstelle aufweisen, die so ausgebildet ist, dass sie bei Überlast durch eine definierte Mindestkraft bricht und dadurch die Batterie in zumindest einer Raumrichtung frei beweglich ist.

Ferner ist aus der DE 10 2011 120 960 A1 ein Kraftfahrzeug mit einer Batterie bekannt, die unterhalb eines Fahrzeugbodens angeordnet ist und mit seitlichen Deformationselementen vor einem Seitencrash geschützt ist. Dabei sind die Deformationselemente jeweils zwischen einem Seitenschweller des Kraftfahrzeugs und der Batterie angeordnet.

Aus der DE 10 2009 052 371 A1 ist ein Kraftfahrzeug mit mehreren Batteriemodulen bekannt, die in einem Batteriegehäuse in Fahrzeugquerrichtung nebeneinander angeordnet sind. Die Batteriemodule sind so angeordnet und/oder ausgebildet, dass sie durch eine die Fahrzeugkarosserie verformende Krafteinwirkung auf das Fahrzeug zerstörungsfrei bewegbar und/oder verformbar sind.

Ferner zeigen die DE 10 2009 040 598 A1 ein Batteriemodul und ein Fahrzeug, die DE 10 2016 203 740 A1 ein Antriebsbatteriegehäuse für ein Hybrid-Kraftfahrzeug und hiermit ausgestattetes Kraftfahrzeug, die WO 2016/008567 A1 ein Kraftfahrzeug und eine Aufnahmevorrichtung zur Aufnahme von elektrischen Energiezellen, die WO 2015/124989 A1 ein Batteriemodul, die US 2013/0153317 A1 ein thermische Barriere für eine Fahrzeugbatterie, die FR 2 979 078 A1 eine Schutzvorrichtung für eine Fahrzeugbatterie und die DE 10 2011 107 210 A1 eine Halteeinrichtung zur Halterung einer Baueinheit an einem Kraftwagen.

Aufgabe der Erfindung ist es, ein Kraftfahrzeug mit mehreren Batteriemodulen zu schaffen, wobei die Batteriemodule auf einfache Weise vor Beschädigungen bei einem Seitencrash geschützt sind.

Diese Aufgabe wird mit einem Kraftfahrzeug mit mehreren Batteriemodulen mit den Merkmalen des Patentanspruchs 1 gelöst.

Erfindungsgemäß weist ein Kraftfahrzeug mehrere Batteriemodule zur Speicherung elektrischer Energie im Bereich eines Unterbodens einer Fahrgastzelle des Kraftfahrzeugs auf. Dabei wird der Unterboden beidseitig jeweils durch einen Seitenschweller begrenzt. In Fahrzeuglängsrichtung gesehen sind mindestens zwei Batteriemodule nebeneinander zwischen den Seitenschwellern angeordnet, wobei die Batteriemodule jeweils an den Seitenschweller angrenzen und zwischen den Batteriemodulen jeweils ein Deformationselement angeordnet ist.

Die Unterbringung der Batteriemodule im Bereich des Unterbodens der Fahrgastzelle bietet einen sehr guten Schutz bei einem Front- oder Heckcrash. Denn an die Fahrgastzelle grenzt in Fahrzeuglängsrichtung gesehen vorne ein Vorderwagen und hinten ein Hinterwagen an. Bei einem Frontcrash oder Heckcrash verformt sich der Vorder- oder Hinterwagen und nimmt zumindest einen Großteil der Kräfte auf. Entsprechend ist bei einem Front- oder Heckcrash die gesamte Fahrgastzelle gut geschützt und wird idealerweise sogar gar nicht deformiert. Daher sind auch die Batteriemodule im Unterboden der Fahrgastzelle bei einem Front- oder Heckcrash gut geschützt. Die größte Gefahr einer nennenswerten Beschädigung eines Batteriemoduls im Unterboden besteht somit bei einem Seitencrash, bei dem ein anderes Fahrzeug oder eine Barriere in Fahrzeugquerrichtung auf das Kraftfahrzeug im Bereich der Fahrgastzelle aufprallt. Die erfindungsgemäße Anordnung ermöglicht es, dass in einem solchen Fall das Batteriemodul auf der Fahrzeugseite, auf der das andere Fahrzeug oder die Barriere aufprallt, in Fahrzeugquerrichtung zum in Fahrzeugquerrichtung gesehen dahinterliegenden Batteriemodul hin verlagert wird. Dabei wird das Deformationselement zwischen den Batteriemodulen zusammengepresst. Das Deformationselement kann plastisch und/oder elastisch verformt werden. Auf alle Fälle absorbiert das Deformationselement beim Verformen zumindest einen Teil der eingebrachten Energie.

Das Anordnen mehrerer Batteriemodule nebeneinander mit dazwischenliegenden Deformationselementen ermöglicht also ein gewisses "Nachgeben", also eine Verlagerung eines Batteriemoduls in Fahrzeugquerrichtung im Falle eines Seitencrashs. Auf diese Weise können Teile der Karosserie und des Unterbodens deformiert werden, ohne dass es dabei gleich zu einer Beschädigung des Batteriemoduls kommt, da dieses sich aus dem besonders kritischen Bereich heraus zu einen danebenliegenden Batteriemodul hin verlagern kann und dabei das dazwischenliegende Deformationselement zusammendrückt.

Idealerweise sind in Fahrzeuglängsrichtung gesehen hintereinander mehrfach nebeneinander angeordnete Batteriemodule im Unterboden untergebracht, die voneinander jeweils durch einen Querträger getrennt sind, der sich in Fahrzeugquerrichtung zwischen den Seitenschwellern erstreckt. Aufgrund des nur begrenzt zur Verfügung stehenden Bauraums können die Batteriemodule nur eine relativ geringe Höhenerstreckung aufweisen. Die maximal zur Verfügung stehende Breite des Bauraums zur Unterbringung der Batteriemodule ist durch die Seitenschweller auch begrenzt. Dafür steht in Fahrzeuglängsrichtung annähernd über die gesamte Längserstreckung der Fahrgastzelle relativ viel Bauraum zur Verfügung. Dieser kann gut genutzt werden, wenn mehrere jeweils nebeneinander angeordnete Batteriemodule in Fahrzeuglängsrichtung gesehen hintereinander angeordnet sind.

Die Abtrennung der in Fahrzeuglängsrichtung hintereinander angeordneten Batteriemodule durch Querträger hat mehrere Vorteile. So können die Batteriemodule beispielsweise zumindest auch an den Querträgern befestigt werden. Zudem erhöhen die Querträger die Steifigkeit der Karosserie insbesondere im Bereich des Unterbodens. Es müssen nicht alle bei einem Seitencrash eingebrachten Kräfte über die Seitenschweller und die Batteriemodule abgeleitet werden, sondern können so zumindest teilweise auch über die Querträger abgeführt werden.

Günstigerweise erstreckt sich zwischen zwei in Fahrzeuglängsrichtung nebeneinander angeordneten Batteriemodulen jeweils ein Längsträger in Fahrzeuglängsrichtung zwischen den an die Batteriemodule angrenzenden Querträgern. Bei einem Frontcrash müssen in Fahrzeuglängsrichtung eingeleitete Kräfte abgeleitet werden. Dazu dienen vor allem die Seitenschweller. Zwischen den Seitenschwellern erfolgt die Abstützung zwischen den Querträgern in Fahrzeuglängsrichtung durch die Längsträger. Bei einem Frontcrash können die Längsträger die eingeleiteten Kräfte in Fahrzeuglängsrichtung übertragen und ableiten, sodass die Batteriemodule nicht oder zumindest nur mehr in geringem Maße beansprucht werden.

Idealerweise ist der Längsträger nicht oder nur so mit den Querträgern verbunden ist, dass die Verbindung sich bei auf den Längsträger in Fahrzeugquerrichtung einwirkenden Kräften leicht löst. Auf diese Weise ist gewährleistet, dass die Längsträger nicht oder nur geringfügig die gewünschte Verlagerbarkeit der Batteriemodule in Fahrzeugquerrichtung bei einem Seitenaufprall beeinträchtigen.

Die Kombination aus Quer- und Längsträgern gewährleistet sowohl bei einem Frontals auch bei einem Seitencrash eine hohe Steifigkeit des Unterbodens der Fahrgastzelle des Personenkraftfahrzeugs, sodass die Batteriemodule gut vor Beschädigungen geschützt sind. Zu diesem Schutz trägt bei einem Frontcrash zusätzlich der Vorderwagen des Personenkraftfahrzeugs als vorgelagerter Deformationsbereich bei. Bei einem Seitencrash tragen die Deformationselemente zwischen zwei in Fahrzeuglängsrichtung nebeneinander angeordneten Batteriemodulen zusätzlich zu diesem Schutz bei, die ein gezieltes Nachgeben der Batteriemodule in Fahrzeugquerrichtung ermöglichen. In Fahrzeuglängsrichtung absorbiert dafür der Vorderwagen des Kraftfahrzeugs bereits große Teile der Crashenergie bei einem Frontcrash.

Gemäß einer vorteilhaften Ausgestaltung sind zwischen den Seitenschwellern jeweils zwei Batteriemodule nebeneinander angeordnet, wobei das Deformationselement zwischen den beiden Batteriemodulen in Fahrzeugquerrichtung in der Mitte angeordnet ist. Dies ist eine einfache symmetrische Anordnung der Batteriemodule, sodass in Fahrzeugquerrichtung bei gleich großen Batteriemodulen das Gewicht der Batteriemodule gleichmäßig verteilt ist. Auch ist bei rein elektrisch angetriebenen Kraftfahrzeugen kein Mitteltunnel für eine Kardanwelle erforderlich, da die elektrischen Antriebsmotoren üblicherweise lokal bei den Antriebsachsen angeordnet sind. Dadurch kann ein durchgehender ebener Fahrzeugboden realisiert werden. Ein Mitteltunnel würde auch die gewünschte Verlagerbarkeit der Batteriemodule behindern. Stattdessen befindet sich im mittleren Bereich zwischen den beiden Batteriemodulen erfindungsgemäß das Deformationselement.

Günstigerweise sind die Batteriemodule quaderförmig. Dies ermöglicht eine optimale Ausnutzung des zur Verfügung stehenden Bauraums zwischen den beiden parallel zueinander in Fahrzeuglängsrichtung verlaufenden Seitenschwellern, die den Bauraum seitlich begrenzen.

Bei einem Seitencrash mit einer schmalen Barriere kann die Barriere auf den Seitenschweller in Fahrzeuglängsrichtung gesehen in einem mittleren Bereich eines Batteriemoduls oder in einem vorderen oder einem hinteren Bereich auftreffen. Bei einem Aufprall in einem mittleren Bereich kann das Batteriemodul sich in Fahrzeugquerrichtung zur Fahrzeugmitte hin verlagern und dabei das Deformationselement zusammenpressen. Bei einem Aufprall im vorderen oder hinteren Bereich dagegen ist das Batteriemodul günstigerweise so gestaltet, dass es sich durch die Krafteinwirkung zumindest auch tordierend verformt. Es verlagert sich also bei einem Aufprall der Barriere im vorderen Bereich des Batteriemoduls der vordere Bereich stärker zur Fahrzeugmitte hin als der hintere Bereich des Batteriemoduls. Bei einem Aufprall der Barriere im hinteren Bereich des Batteriemoduls dagegen verlagert sich der hintere Bereich des Batteriemoduls weiter zur Fahrzeugmitte hin als der vordere Bereich des Batteriemoduls. Es kommt aber jeweils zu keiner Drehung des Batteriemoduls.

Dabei ist es wichtig, dass auch bei einer Torsion des Batteriemoduls die darin angeordneten Speicherzellen möglichst nicht beschädigt werden. Idealerweise sind daher mehrere zylinderförmige Speicherzellen in dem Batteriemodul angeordnet, deren Längsachsen alle parallel zueinander sind. Insbsondere eignet sich eine Anordnung der Speicherzellen, bei der alle Längsachsen der Speicherzellen in Fahrzeughochrichtung verlaufen. Bei einer Torsion des Batteriemoduls rollen und/oder gleiten die Speicherzellen aneinander ab, und können sich so etwas in dem Batteriemodul verlagern, ohne dass sie dabei beschädigt werden. Dabei ist es wichtig, dass die Verkabelung der Speicherzellen untereinander diese Verlagerung mitmachen kann und die Speicherzellen nicht an dieser Beweglichkeit durch irgendwelche Fixierungen gehindert werden.

Das Deformationselement zwischen den Batteriemodulen soll einerseits sich nachgiebig zusammendrücken lassen, es soll zum anderen dabei aber auch möglichst viel Energie absorbieren können. Geeignete Materialen hierfür sind beispielsweise Metallschäume oder Polymerschäume, da diese Materialen kostengünstig verfügbar sind und ein geringes Eigengewicht aufweisen. Gleichermaßen geeignet sind aber auch zahlreiche andere Ausführungen. So kann das Deformationselement beispielsweise auch aus einer Anordnung zahlreicher Waben bestehen, die beispielsweise in einem Bauteil aus Kunststoff einteilig miteinander ausgeführt sein können.

Die Batteriemodule sind zwischen den Seitenschwellern und gegebenenfalls bei mehreren in Fahrzeuglängsrichtung hintereinander angeordneten Batteriemodulen zwischen den Querträgern angeordnet. Zur Befestigung können die Batteriemodule entsprechend an den Seitenschwellern und/oder an den Querträgern aufgenommen sein. Aber auch ein in Fahrzeughöhenrichtung nach oben die Batteriemodule begrenzender Deckel oder nach unten hin begrenzender Boden können zur Befestigung dienen. Sowohl die Seitenschweller, als auch die Querträger und ein Boden oder Deckel zählen dabei zur tragenden Struktur des Kraftfahrzeugs. Dabei ist jedes Batteriemodul vorteilhafterweise über mindestens eine Haltevorrichtung mit der tragenden Struktur des Kraftfahrzeugs verbunden.

Die Haltevorrichtungen fixieren die Batteriemodule in ihrer normalen Position. Allerdings sollen die Haltevorrichtungen die Batteriemodule im Falle eines Seitencrashs nicht daran hindern, sich entsprechend in Fahrzeugquerrichtung verlagern zu können. Daher sind die Haltevorrichtungen idealerweise so ausgelegt, dass sie bei Überlast durch eine definierte Mindestkraft sich lösen oder an einer Sollbruchstelle brechen.

Somit behindert die Haltevorrichtung die gewünschte Verlagerbarkeit des Batteriemoduls bei einem Seitencrash nicht, da dabei die definierte Mindestkraft überschritten wird. Allerdings besteht die Möglichkeit, dass sich das Batteriemodul beim Verlagern verkantet und somit nicht wie gewünscht das Deformationselement deformiert. Um dies zu verhindern, führt die Haltevorrichtung nach einem Lösen oder Brechen der Sollbruchstelle bei Überlast das Batteriemodul vorteilhafterweise noch, sodass es sich nur in einer Raumrichtung verlagern kann. Diese eine Raumrichtung ist bevorzugt die Fahrzeugquerrichtung des Kraftfahrzeugs.

Dabei kann die Haltevorrichtung günstigerweise zusätzlich so ausgelegt sein, dass bei einer Verlagerung des Batteriemoduls entlang der durch die Haltevorrichtung vorgegebenen Raumrichtung Energie in der Haltevorrichtung absorbiert wird. Dazu kann die Führung in der Haltevorrichtung beispielsweise Reibflächen aufweisen und/oder ein Abschnitt der Haltevorrichtung verformt werden.

Weitere vorteilhafte Ausgestaltungen sind Gegenstand von Unteransprüchen.

In der Zeichnung ist ein Ausführungsbeispiel der Erfindung dargestellt, anhand dessen die Erfindung im Folgenden näher beschrieben wird. Die einzelnen Figuren zeigen in schematischer Darstellungsweise:
- Fig. 1: eine perspektivische Ansicht eines Unterbodens einer Fahrgastzelle eines Personenkraftfahrzeugs mit mehreren Batteriemodulen,
- Fig. 2a: eine Prinzipdarstellung der in Fig. 1 gezeigten Anordnung der Batteriemodule,
- Fig. 2b: die in Fig. 2a gezeigte Anordnung beim Eindringen einer Barriere im mittleren Bereich eines Batteriemoduls,
- Fig. 2c: die in Fig. 2a gezeigte Anordnung beim Eindringen einer Barriere im seitlichen Bereich eines Batteriemoduls,
- Fig. 3: eine Draufsicht auf eine Anordnung ähnlich zu der in Fig. 1 gezeigte Anordnung mit zusätzlichen Haltevorrichtungen,
- Fig. 4a: eine erste Ausführungsform einer Haltevorrichtung in einer Normalstellung,
- Fig. 4b: die in Fig. 4a gezeigte Haltevorrichtung nach einer Verlagerung,
- Fig. 5a: eine zweite Ausführungsform einer Haltevorrichtung in einer Normalstellung,
- Fig. 5b: die in Fig. 5a gezeigte Haltevorrichtung nach einer Verlagerung und
- Fig. 6: eine alternative Anordnung mehrerer Batteriemodule im Unterboden einer Fahrgastzelle eines Personenkraftfahrzeugs

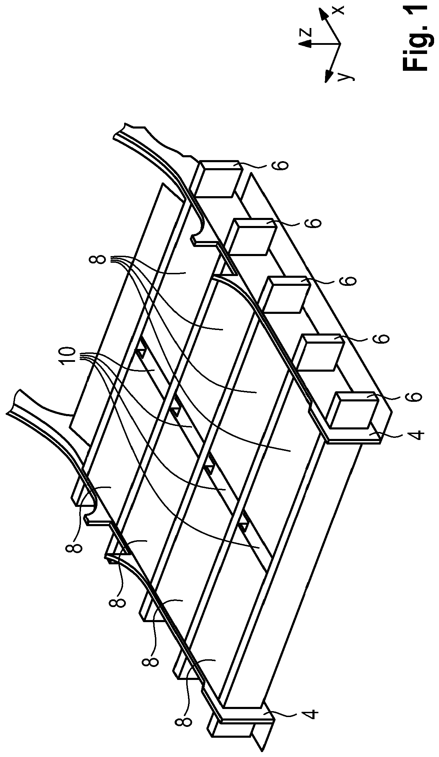

In Figur 1 ist eine perspektivische Ansicht eines Unterbodens einer Fahrgastzelle eines Personenkraftfahrzeugs dargestellt. Die Fahrgastzelle des Personenkraftfahrzeugs befindet sich zwischen einem nicht gezeigten Vorderwagen, der in Fahrzeuglängsrichtung x vorne an die Fahrgastzelle angrenzt, und einem ebenfalls nicht dargestellten Hinterwagen, der in Fahrzeuglängsrichtung x hinten an die Fahrgastzelle angrenzt. Die Fahrgastzelle wird im Bodenbereich beidseitig jeweils von einem Seitenschweller begrenzt. Die Seitenschweller bestehen in Blechschalenbauweise jeweils aus einem Innenblech und einem Außenblech, die gemeinsam jeweils einen Hohlraum umschließen, in dem weitere Verstärkungselemente eingebracht sein können. In der Figur 1 sind nur die Innenbleche 4 des Seitenschwellers dargestellt, die sich als Längsträger im äußeren seitlichen Bereich des Unterbodens in Fahrzeuglängsrichtung x erstrecken. Zwischen diesen beiden Innenblechen 4 des Seitenschwellers erstrecken sich mehrere Querträger 6 in Fahrzeugquerrichtung y. Die Abstände zwischen zwei benachbarten Querträgern 6 in Fahrzeuglängsrichtung x ist jeweils gleich groß.

In Fahrzeuglängsrichtung x gesehen befinden sich jeweils zwei quaderförmige Batteriemodule 8 nebeneinander zwischen den beiden Innenblechen 4. Dabei grenzen die Batteriemodule 8 jeweils direkt an das jeweilige Innenblech 4 an. In Fahrzeugquerrichtung y gesehen im mittleren Bereich zwischen den beiden nebeneinander angeordneten Batteriemodulen 8 befindet sich ein Deformationselement 10 aus einem Polymerschaum. In Fahrzeuglängsrichtung x gesehen sind mehrere Reihen solcher nebeneinander angeordneter Batteriemodule 8 hintereinander untergebracht. Dabei sind die hintereinander angeordneten Batteriemodule 8 jeweils durch einen Querträger 6 voneinander getrennt. Der Abstand der Querträger 6 zueinander entspricht genau den Maßen der Batteriemodule 8, sodass diese in Fahrzeuglängsrichtung x gesehen vorne und hinten jeweils an einen Querträger 6 angrenzen. In dem Deformationselement 10 kann zusätzlich eine Kühlung der Batteriemodule 8 und/oder Kabel zur Kontaktierung untergebracht sein.

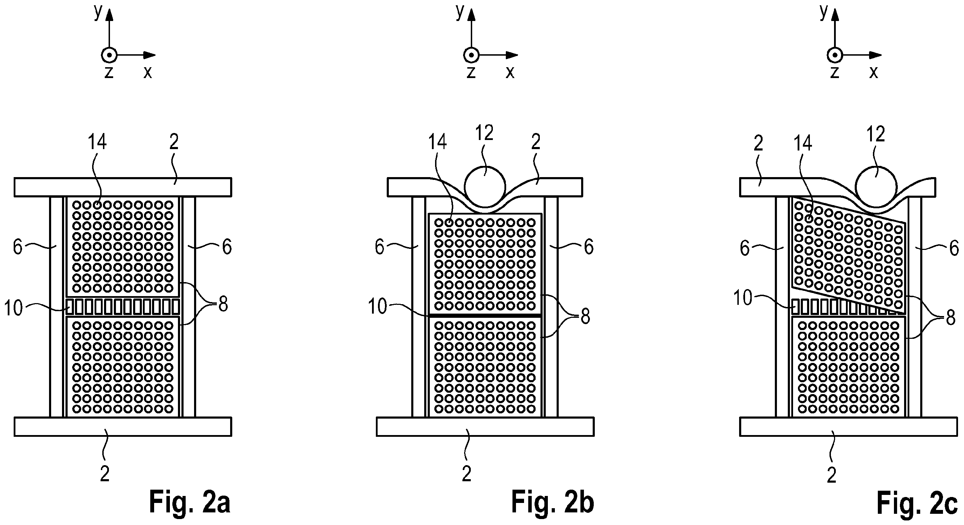

Anhand der Figuren 2a bis 2c wird im Folgenden die grundsätzliche Funktionsweise dieser Anordnung erläutert. In den Figuren 2a bis 2c sind anstelle der Innenbleche 4 jeweils sehr vereinfacht die gesamten Seitenschweller 2 dargestellt. Gezeigt ist auch nur eine Reihe mit zwei in Fahrzeuglängsrichtung x gesehen nebeneinander angeordneten Batteriemodulen 8, zwischen denen in der Mitte das Deformationselement 10 angeordnet ist.

In der Figur 2a ist diese Anordnung gezeigt, wenn keine mechanische Belastung auf sie einwirkt. Die beiden Batteriemodule 8 grenzen jeweils direkt an den Seitenschweller 2 an, das Deformationselement 10 ist nicht oder nur geringfügig zusammengepresst und hält die beiden Batteriemodule 8 in ihrer Position.

In der Figur 2b ist die gleiche Anordnung nach einem Seitencrash dargestellt, bei dem eine Barriere 12 in Fahrzeugquerrichtung y zwischen den beiden Querträgern 6 auf den Seitenschweller 2 auftraf. Durch den Aufprall der Barriere 12 kam es zu einer Verformung des Seitenschwellers 2. Dieser wurde durch die Barriere 12 lokal in Fahrzeugquerrichtung y eingedrückt. Dieser eingedrückte Bereich wiederum drückt auf das angrenzende Batteriemodul 8, das dadurch gegen das Deformationselement 10 gedrückt wird. Das Deformationselement 10 wurde dadurch zusammengedrückt, weil es eine geringere Steifigkeit als das Batteriemodul 8 aufweist. So konnte das Batteriemodul 8 sich in Fahrzeugquerrichtung y zur Fahrzeugmitte hin verlagern und dem eingedrückten Seitenschweller 2 ausweichen, sodass es nicht beschädigt wurde. Wichtig dabei ist, dass die Steifigkeit des Batteriemoduls 8 deutlich höher ist als die Steifigkeit des Deformationselements 10. Die in das Kraftfahrzeug durch den Seitencrash eingebrachte Energie wird dabei teilweise durch die Deformation des Seitenschwellers 2, durch das Zusammendrücken des Deformationselements 10 und durch die Reibung beim Verlagern des Batteriemoduls 8 an den angrenzenden Bauteilen absorbiert.

In Fig. 2c ist die in Fig. 2a gezeigte Anordnung nach einem Seitencrash gezeigt, bei dem eine Barriere 12 in Fahrzeugquerrichtung y auf den Seitenschweller 2 auftraf. Dabei traf die Barriere 12 in Fahrzeuglängsrichtung x gesehen im hinteren Bereich eines Batteriemoduls 8 auf den Seitenschweller 2 auf. Durch den Aufprall der Barriere 12 kam es auch hier lokal zu einer Verformung des Seitenschwellers 2. Dieser wurde durch die Barriere 12 lokal in Fahrzeugquerrichtung y eingedrückt. Dieser eingedrückte Bereich wiederum drückt auf den hinteren Bereich des angrenzenden Batteriemoduls 8. Dadurch entstehen zwei Effekte: Erstens wird wieder das gesamte Batteriemodul 8 gegen das Deformationselement 10 gedrückt. Zweitens tordiert das Batteriemodul 8, es verwindet sich also. Dabei wird der hintere, höher belastete Bereich des Batteriemoduls 8 weiter in das Deformationselement 10 hinein verlagert als der vordere Bereich. Aufgrund der angrenzenden Querstege kann sich aber das Batteriemodul 8 dabei nicht drehen. Stattdessen kommt es zu einer Torsion des Batteriemoduls 8. Diese Deformation des Batteriemoduls 8 trägt zusätzlich zur Absorption der eingebrachten Crashenergie bei.

In dem Batteriemodul 8 sind viele einzelne Speicherzellen 14 untergebracht, die miteinander elektrisch verbunden sind. Die Speicherzellen 14 sind hierbei alle zylinderförmig. Sie erstrecken sich dabei mit ihrer Längsachse in Fahrzeughöhenrichtung z und sind alle zueinander parallel. Wenn nun beispielsweise bei einer Torsion des Batteriemoduls 8 Kräfte auf die Speicherzellen 14 einwirken, können diese aneinander abrollen und/oder abgleiten, ohne dass sie sich verkeilen können. Auf diese Weise können sich die Speicherzellen 14 in dem Batteriemodul 8 etwas verlagern, ohne beschädigt zu werden. Dazu dürfen die einzelnen Speicherzellen 14 allerdings nicht in dem Batteriemodul 14 steif fixiert sein, da eine solche Fixierung die gewünschte Verlagerbarkeit behindern würde. Auch muss die elektrische Kontaktierung so flexibel gestaltet sein, dass die Verlagerbarkeit nicht nennenswert beeinträchtigt wird.

Insgesamt bietet die erfindungsgemäße Anordnung mit den nebeneinander angeordneten Batteriemodulen 8 und dem dazwischen angeordneten Deformationselement 10 sowie den Querstegen 6 zwischen den einzelnen Reihen mit Batteriemodulen 8 einen so guten Schutz, dass kein Batteriegehäuse mehr erforderlich ist, dass alle Batteriemodule 8 gemeinsam umgibt.

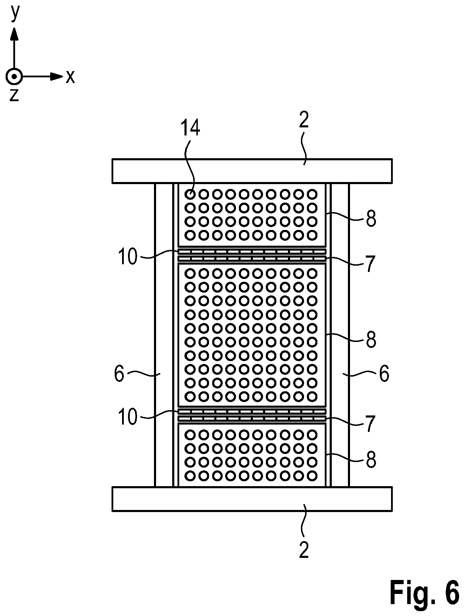

In Figur 6 ist eine alternative Anordnung zu der in den Figuren 2a bis 2c offenbarten Anordnung gezeigt. Zwischen den beiden Seitenschwellern 2 erstrecken sich mehrere Querträger 6 in Fahrzeugquerrichtung y. Zwischen den beiden Seitenschwellern 2 und zwischen zwei Querträgern 6 sind in Fahrzeugquerrichtung y gesehen drei Batteriemodule 8 untergebracht, die in Fahrzeuglängsrichtung x gesehen nebeneinander angeordnet sind. Dabei sind die beiden äußeren Batteriemodule 8 nur halb so breit wie das mittlere Batteriemodul 8. Alle Batteriemodule 8 grenzen in Fahrzeuglängsrichtung x gesehen vorne und hinten jeweils an die Querträger 6 an. Zwischen den Batteriemodulen 8 ist jeweils ein Deformationselement 10 angeordnet. Insoweit ist die Anordnung sehr ähnlich zu der in den Figuren 2a bis 2c gezeigten Anordnung und erfüllt dieselben Funktionen.

Allerdings befindet sich bei der in Figur 6 gezeigten Anordnung zwischen den Batteriemodulen 8 jeweils neben dem Deformationselement 10 noch zusätzlich ein Längsträger 7. Jeder Längsträger 7 erstreckt sich in Fahrzeuglängsrichtung x und grenzt beidseitig an die Querträger 6 an. Dabei sind die Längsträger 7 nicht an die Querträger 6 angebunden. Alternativ können die Längsträger 7 so mit den Querträgern 6 verbunden sein, dass die Verbindungen sich bereits bei relativ geringen, in Fahrzeugquerrichtung y einwirkenden Kräften lösen.

Bei einem Seitencrash können sich genau wie bei der in den Figuren 2a bis 2c gezeigten Anordnung die Batteriemodule 8 in Fahrzeugquerrichtung y etwas verlagern, indem sie die Deformationselemente 10 verformen. Diese gewünschte Verlagerbarkeit wird durch die Längsträger 7 nicht behindert. Zudem werden die in Fahrzeugquerrichtung y eingeleiteten Crashkräfte über die Querträger 6 abgeleitet. Dadurch ist der Schutz in Fahrzeugquerrichtung y so gut, dass die Batteriemodule 8 nicht in einem zusätzlichen steifen Batteriegehäuse untergebracht werden müssen, um sie vor großen Beschädigungen zu schützen.

Bei einem Frontcrash dient der Vorderwagen als gezielter Deformationsbereich, der große Teile der eingeleiteten Crashenergie aufnehmen kann. Die restlichen eingeleiteten Kräfte werden in Fahrzeuglängsrichtung x durch die Seitenschweller 2 abgeleitet. Zusätzlich können bei dieser Anordnung die Längsträger 7 zwischen den Querträgern 6 Kräfte in Fahrzeuglängsrichtung x ableiten, sodass diese Kräfte nicht oder nur mehr zu einem wesentlich kleineren Teil durch die Batteriemodule 8 aufgenommen werden müssen. Somit optimieren die Längsträger 7 die Kräfteableitung im Falle eines Crashs, sodass die Batteriemodule 8 auch für den Fall eines Frontcrashs kein zusätzliches steifes Batteriegehäuse mehr benötigen, sondern direkt im Fahrzeugunterboden angeordnet werden können.

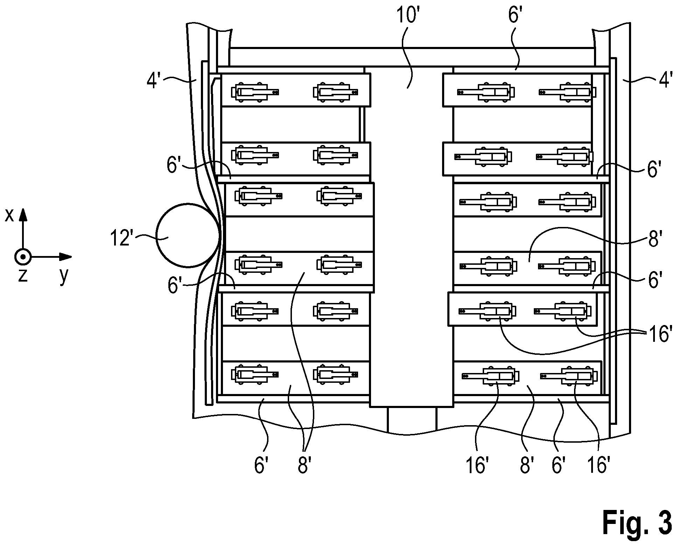

In Figur 3 ist eine Draufsicht auf eine Anordnung gezeigt, die der in Figur 1 gezeigten Anordnung sehr ähnlich ist. Daher werden in der Figur 3 für alle Bauteile, die einem bereits in Figur 1 gezeigten Bauteil entsprechen, die gleichen Bezugszeichen verwendet, jeweils ergänzt um einen Apostroph.

Auch in dem in Figur 3 gezeigten Ausführungsbeispiel sind in Fahrzeuglängsrichtung x gesehen jeweils zwei Batteriemodule 8` nebeneinander angeordnet, die an die Innenbleche 4' der Seitenschweller angrenzen. Zwischen den beiden Batteriemodulen 8' ist ein Deformationselement 10' angeordnet. Die einzelnen Reihen der nebeneinander angeordneten Batteriemodule 8` sind durch Querträger 6' voneinander getrennt.

Jedes Batteriemodul 8' ist über Haltevorrichtungen 16' mit der tragenden Struktur des Kraftfahrzeugs verbunden. Zur tragenden Struktur zählen dabei die Seitenschweller mit den Innenblechen 4`, die Querträger 6`, aber auch ein nicht dargestellter Boden oder Deckel des Unterbodens, die den Bauraum der Batteriemodule 8' nach unten bzw. oben begrenzen. Die Haltevorrichtungen 16' dienen zur Befestigung der Batteriemodule 8`, sodass diese im Normalbetrieb in ihrer Sollposition sicher gehalten sind. Allerdings dürfen die Haltevorrichtungen 16' im Falle eines Seitencrashs die gewünschte Verlagerung eines Batteriemoduls 8' nicht behindern. Daher sind die Haltevorrichtungen 16' so ausgelegt, dass bei einer Überlast, also bei einem Übersteigen der auf die Haltevorrichtung 16` einwirkenden Kraft über einen definierten Grenzwert hinaus, die Fixierung des Batteriemoduls 8' durch die Haltevorrichtung 16' entweder gelöst wird oder die Fixierung zerbricht, sodass das Batteriemodul 8' sich verlagern kann.

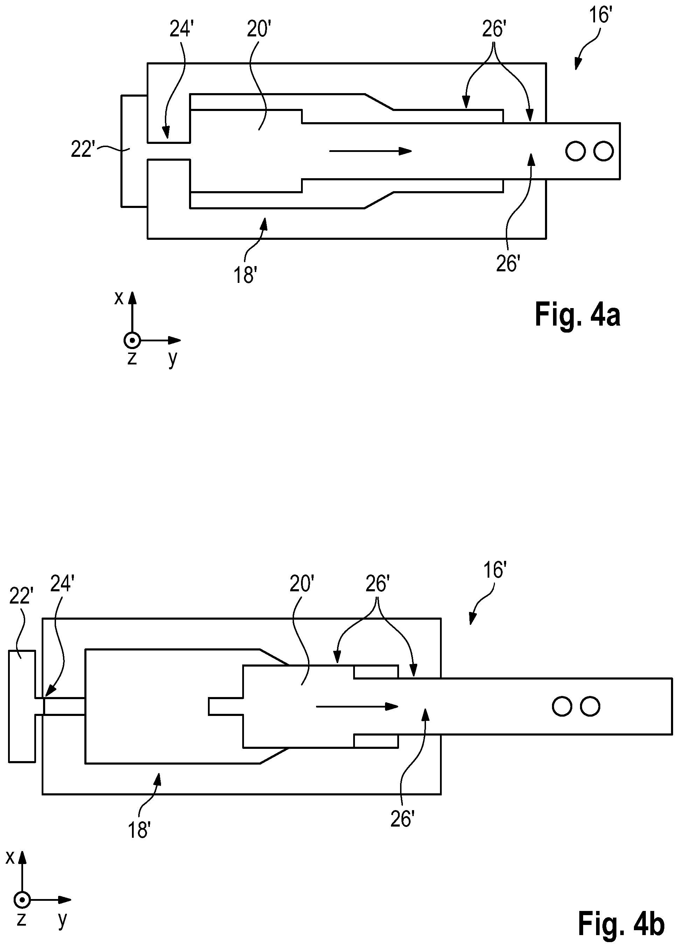

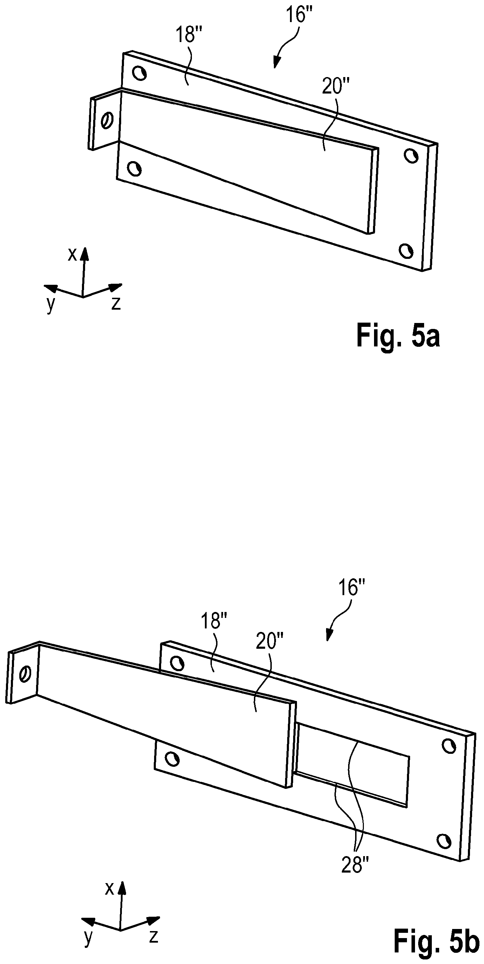

Zusätzlich erfüllen die Haltevorrichtungen 16' die Funktion einer Längsführung: Nach dem Lösen oder Zerbrechen der Fixierung dienen die Haltevorrichtungen 16' als Führung, sodass das Batteriemodul 8' sich nur entlang der Längsführung verlagern kann. Auf diese Weise wird verhindert, dass sich das Batteriemodul 8' beim Verlagern verkanten kann, sodass es sich nicht wunschgemäß verlagert. Für solche Haltevorrichtungen 16' gibt es mehrere technische Lösungen. Eine erste Ausführungsform einer solchen Haltevorrichtung 16' ist in den Figuren 4a und 4b gezeigt, eine weitere Ausführungsform ist in den Figuren 5a und 5b dargestellt.

Die in den Figuren 4a und 4b gezeigte Haltevorrichtung 16` umfasst einen beweglichen, kolbenartigen Abschnitt 20', der in einer hohlzylindrischen Führung in einer festen Aufnahme 18' geführt ist. Die Haltevorrichtung 16` ist dabei mit der festen Aufnahme 18' beispielsweise an einem Querträger befestigt, während der bewegliche Abschnitt 20' mit dem Batteriemodul 8' verbunden ist.

Der bewegliche, kolbenartige Abschnitt 20' ist über eine dünne Verbindung mit einem pilzförmigen Endabschnitt 22' verbunden, der hinten aus der festen Aufnahme 18' herausragt. Der pilzförmige Endabschnitt 22' bildet zusammen mit dem kolbenartigen Abschnitt 20' und der dünnen Verbindung einen Formschluss, sodass in der in Figur 4a gezeigten Grundstellung keine Verlagerung des beweglichen, kolbenartigen Abschnitts 20' in der festen Aufnahme 18' möglich ist.

Die dünne Verbindung zwischen dem pilzförmigen Endabschnitt 22' und dem beweglichen, kolbenartigen Abschnitt 20` bildet eine Sollbruchstelle 24`, die - wie in Figur 4b gezeigt - bei Überlast zerbricht. Dann kann sich der bewegliche, kolbenartige Abschnitt 20` in Querrichtung y in der festen Aufnahme 18' verlagern, sodass sich das Batteriemodul 8' in einer Richtung geführt verlagern kann. Dabei können die Gleitflächen zwischen dem beweglichen, kolbenartigen Abschnitt 20' und der festen Aufnahme 18' als Reibflächen 26' ausgeführt sein, sodass eine Verlagerung nur erfolgt, wenn eine entsprechende Kraft an dem beweglichen, kolbenartigen Abschnitt 20' angreift. Die Reibflächen 26' dienen dabei zusätzlich zur Energieabsorption.

In den Figuren 5a und 5b ist eine alternative Ausführungsform einer Haltevorrichtung 16" gezeigt. Auch diese Haltevorrichtung 16" umfasst ein bewegliches Teil 20", das an einer festen Aufnahme 18" geführt ist. Dabei wird die Führung gebildet, durch zwei in einem sehr flachen Winkel aufeinander zu laufende, schräge Führungsflächen 28" an der festen Aufnahme, zwischen denen das bewegliche Teil 20" formschlüssig gehalten ist. Eine geführte Verlagerung in Querrichtung y ist hier nur möglich, wenn das bewegliche Teil 20" plastisch verformt und zwischen den schrägen Führungsflächen 28" zusammengedrückt wird. Durch die plastische Verformung des beweglichen Teils 20" wird dabei Energie absorbiert.

### Bezugszeichenliste:

- 2: Seitenschweller
- 4, 4`: Innenblech (des Seitenschwellers)
- 6, 6`: Querträger
- 7: Längsträger
- 8, 8`: Batteriemodul
- 10, 10': Deformationselement
- 12, 12': Barriere
- 14: Speicherzelle
- 16', 16": Haltevorrichtung
- 18', 18": feste Aufnahme (der Haltevorrichtung)
- 20', 20": beweglicher Abschnitt (der Haltevorrichtung)
- 22': Fixierabschnitt
- 24': Sollbruchstelle
- 26`: Reibfläche
- 28": schräge Führungsfläche

## Patentansprüche

1. Kraftfahrzeug mit mehreren Batteriemodulen (8) zur Speicherung elektrischer Energie im Bereich eines Unterbodens einer Fahrgastzelle des Kraftfahrzeugs, wobei der Unterboden beidseitig jeweils durch einen Seitenschweller (2) begrenzt wird, wobei in Fahrzeuglängsrichtung (x) gesehen mindestens zwei Batteriemodule (8) nebeneinander zwischen den Seitenschwellern (2) angeordnet sind, wobei jeweils ein Batteriemodul (8) an die Seitenschweller (2) angrenzt und zwischen den Batteriemodulen (8) jeweils mindestens ein Deformationselement (10) angeordnet ist, **dadurch gekennzeichnet, dass** in Fahrzeuglängsrichtung (x) gesehen hintereinander mehrfach nebeneinander angeordnete Batteriemodule (8) im Unterboden untergebracht sind, die voneinander jeweils durch einen einzigen Querträger (6) getrennt sind, der sich in Fahrzeugquerrichtung (y) zwischen den Seitenschwellern (2) erstreckt.

2. Kraftfahrzeug nach Anspruch 1, **dadurch gekennzeichnet, dass** zwischen zwei in Fahrzeuglängsrichtung (x) nebeneinander angeordneten Batteriemodulen (8) sich jeweils ein Längsträger (7) zwischen den an die Batteriemodule (8) angrenzenden Querträgern (6) in Fahrzeuglängsrichtung (x) erstreckt.

3. Kraftfahrzeug nach Anspruch 2, **dadurch gekennzeichnet, dass** der Längsträger (7) nicht oder nur so mit den Querträgern (6) verbunden ist, dass die Verbindung bei auf den Längsträger (7) in Fahrzeugquerrichtung (y) einwirkenden Kräften lösbar ist.

4. Kraftfahrzeug nach einem der Ansprüche 1 bis 3, **dadurch gekennzeichnet, dass** zwischen den Seitenschwellern (2) jeweils zwei Batteriemodule (8) angeordnet sind, wobei das Deformationselement (10) zwischen den beiden Batteriemodulen (8) in Fahrzeugquerrichtung (y) in der Mitte angeordnet ist.

5. Kraftfahrzeug nach einem der Ansprüche 1 bis 4, **dadurch gekennzeichnet, dass** die Batteriemodule (8) quaderförmig sind.

6. Kraftfahrzeug nach Anspruch 5, **dadurch gekennzeichnet, dass** zumindest ein Batteriemodul (8) sich Krafteinwirkung verformbar ist.

7. Kraftfahrzeug nach Anspruch 6, **dadurch gekennzeichnet, dass** in dem Batteriemodul (8) mehrere zylinderförmige Speicherzellen (14) angeordnet sind, die bei der Torsion im Batteriemodul (8) verlagerbar sind.

8. Kraftfahrzeug nach einem der vorhergehenden Ansprüche, **dadurch gekennzeichnet, dass** das mindestens eine Deformationselement (10) aus einem Metallschaum oder Polymerschaum besteht.

9. Kraftfahrzeug nach einem der vorhergehenden Ansprüche, dass die Batteriemodule (8) jeweils über mindestens eine Haltevorrichtung (16', 16") mit der tragenden Struktur des Kraftfahrzeugs verbunden sind.

10. Kraftfahrzeug nach Anspruch 9, **dadurch gekennzeichnet, dass** die zumindest eine Haltevorrichtung (16', 16") so ausgelegt ist, dass sie bei Überlast durch eine definierte Mindestkraft sich löst oder an einer Sollbruchstelle (24') bricht.

11. Kraftfahrzeug nach Anspruch 10, **dadurch gekennzeichnet, dass** die Haltevorrichtung (16', 16") nach einem Lösen oder Brechen der Sollbruchstelle (24') bei Überlast das Batteriemodul (8) noch führt, sodass es nur in einer Raumrichtung geführt verlagerbar ist.

12. Kraftfahrzeug nach Anspruch 11, **dadurch gekennzeichnet, dass** die Haltevorrichtung (16', 16") so ausgelegt ist, dass bei einer Verlagerung des Batteriemoduls (8) entlang der durch die Haltevorrichtung (16', 16") vorgegebenen Raumrichtung Energie in der Haltevorrichtung (16', 16") absorbierbar ist.

13. Kraftfahrzeug nach Anspruch 12, **dadurch gekennzeichnet, dass** zur Energieabsorption die Führung in der Haltevorrichtung (16', 16") Reibflächen (26') aufweist und/oder ein Abschnitt des Haltevorrichtung (16") verformt wird.

## Claims

1. Motor vehicle having a plurality of battery modules (8) for storing electrical energy in the region of an underbody of a passenger cell of the motor vehicle, wherein the underbody is delimited on both sides by a respective side sill (2), wherein, as viewed in the vehicle longitudinal direction (x), at least two battery modules (8) are arranged next to one another between the side sills (2), wherein in each case a battery module (8) adjoins the side sills (2) and in each case at least one deformation element (10) is arranged between the battery modules (8), **characterized in that**, as viewed in the vehicle longitudinal direction (x), multiple battery modules (8) arranged next to one another are accommodated behind one another in the underbody and are separated from one another in each case by a single crossmember (6) which extends in the vehicle transverse direction (y) between the side sills (2).

2. Motor vehicle according to Claim 1, **characterized in that** in each case a longitudinal member (7) extends between the crossmembers (6), which adjoin the battery modules (8), in the vehicle longitudinal direction (x) between two battery modules (8) arranged next to one another in the vehicle longitudinal direction (x).

3. Motor vehicle according to Claim 2, **characterized in that** the longitudinal member (7) is not connected to the crossmembers (6) or only such that the connection is releasable under forces acting on the longitudinal member (7) in the vehicle transverse direction (y).

4. Motor vehicle according to one of Claims 1 to 3, **characterized in that** in each case two battery modules (8) are arranged between the side sills (2), wherein the deformation element (10) is arranged between the two battery modules (8) in the vehicle transverse direction (y) in the centre.

5. Motor vehicle according to one of Claims 1 to 4, **characterized in that** the battery modules (8) are cuboidal.

6. Motor vehicle according to Claim 5, **characterized in that** at least one battery module (8) is deformable under the action of force.

7. Motor vehicle according to Claim 6, **characterized in that** a plurality of cylindrical storage cells (14) are arranged in the battery module (8) and are displaceable under the torsion in the battery module (8).

8. Motor vehicle according to one of the preceding claims, **characterized in that** the at least one deformation element (10) consists of a metal foam or polymer foam.

9. Motor vehicle according to one of the preceding claims, **characterized in that** the battery modules (8) are each connected to the supporting structure of the motor vehicle via at least one holding device (16', 16").

10. Motor vehicle according to Claim 9, **characterized in that** the at least one holding device (16', 16") is designed in such a way that it is released under overload by a defined minimum force or breaks at a predetermined breaking point (24').

11. Motor vehicle according to Claim 10, **characterized in that**, after release or breakage of the predetermined breaking point (24') under overload, the holding device (16', 16") still guides the battery module (8) such that it is displaceable in a guided manner only in one spatial direction.

12. Motor vehicle according to Claim 11, **characterized in that** the holding device (16', 16") is designed in such a way that, during a displacement of the battery module (8) along the spatial direction predetermined by the holding device (16', 16"), energy in the holding device (16', 16") is absorbable.

13. Motor vehicle according to Claim 12, **characterized in that**, for energy absorption, the guide in the holding device (16', 16") has friction surfaces (26') and/or a portion of the holding device (16") is deformed.

## Revendications

1. Véhicule à moteur comprenant plusieurs modules de batterie (8) pour le stockage d'énergie électrique dans la zone d'un dessous de caisse d'un habitacle du véhicule à moteur, dans lequel le dessous de caisse est délimité des deux côtés par une jupe latérale (2), dans lequel, vu dans la direction longitudinale (x) du véhicule, au moins deux modules de batterie (8) sont disposés les uns à côté des autres entre les jupes latérales (2), un module de batterie (8) étant respectivement adjacent aux longerons latéraux (2) et au moins un élément de déformation (10) étant respectivement disposé entre les modules de batterie (8), **caractérisé en ce que**, vu dans la direction longitudinale (x) du véhicule, des modules de batterie (8) disposés de manière répétée les uns à côté des autres sont logés dans le dessous de caisse et sont respectivement séparés les uns des autres par une seule traverse (6), qui s'étend dans la direction transversale (y) du véhicule entre les jupes latérales (2) .

2. Véhicule à moteur selon la revendication 1, **caractérisé en ce qu'**entre deux modules de batterie (8) disposés l'un à côté de l'autre dans la direction longitudinale (x) du véhicule, un longeron (7) s'étend respectivement entre les traverses (6) adjacentes aux modules de batterie (8) dans la direction longitudinale (x) du véhicule.

3. Véhicule à moteur selon la revendication 2, **caractérisé en ce que** le longeron (7) n'est pas relié aux traverses (6) ou ne leur est relié que de manière à ce que cette liaison soit séparable en cas de forces agissant sur le longeron (7) dans la direction transversale (y) du véhicule.

4. Véhicule à moteur selon l'une des revendications 1 à 3, **caractérisé en ce que** deux modules de batterie (8) sont respectivement disposés entre les jupes latérales (2), l'élément de déformation (10) étant disposé au milieu entre les deux modules de batterie (8) dans la direction transversale (y) du véhicule.

5. Véhicule à moteur selon l'une des revendications 1 à 4, **caractérisé en ce que** les modules de batterie (8) sont parallélépipédiques.

6. Véhicule à moteur selon la revendication 5, **caractérisé en ce qu'**au moins un module de batterie (8) est déformable sous l'effet d'une force.

7. Véhicule à moteur selon la revendication 6, **caractérisé en ce que** plusieurs cellules de stockage (14) cylindriques sont disposées dans le module de batterie (8) et peuvent être déplacées lors de la torsion dans le module de batterie (8).

8. Véhicule à moteur selon l'une des revendications précédentes, **caractérisé en ce que** ledit au moins un élément de déformation (10) est constitué d'une mousse métallique ou d'une mousse polymère.

9. Véhicule à moteur selon l'une des revendications précédentes, **caractérisé en ce que** les modules de batterie (8) sont respectivement reliés à la structure porteuse du véhicule automobile par au moins un dispositif de maintien (16', 16").

10. Véhicule à moteur selon la revendication 9, **caractérisé en ce que** ledit au moins un dispositif de maintien (16', 16") est conçu de manière à se détacher ou se rompre au niveau d'un point de rupture (24') en cas de surcharge due à une force minimale définie.

11. Véhicule à moteur selon la revendication 10, **caractérisé en ce que** le dispositif de maintien (16', 16") continue de guider le module de batterie (8) après une séparation ou une rupture du point de rupture (24') lors d'une surcharge, de sorte qu'il ne peut être déplacé que guidé dans une direction spatiale.

12. Véhicule à moteur selon la revendication 11, **caractérisé en ce que** le dispositif de maintien (16', 16") est conçu de telle sorte que, lors d'un déplacement du module de batterie (8) suivant la direction spatiale prédéfinie par le dispositif de maintien (16', 16"), de l'énergie peut être absorbée dans le dispositif de maintien (16', 16").

13. Véhicule à moteur selon la revendication 12, **caractérisé en ce que**, pour l'absorption d'énergie, le dispositif de guidage dans le dispositif de maintien (16', 16") présente des surfaces de frottement (26') et/ou une partie du dispositif de maintien (16") se déforme.
